# FASCICULE DE BREVET EUROPEEN

(11) **EP 4 417 954 B1**
(45) Date de publication et mention de la délivrance du brevet: **01.04.2026**
(21) Numéro de dépôt: 24156492.1
(22) Date de dépôt: 08.02.2024
(51) Int. Cl.: G01L 15/00, G01L 23/26, G01M 15/14, G01L 23/24, F01D 17/08

(54) **RÂTEAU DE MESURE DE PRESSION ANTISTATIQUE**
ANTISTATISCHES DRUCKMESSRECHEN
ANTI-STATIC PRESSURE MEASURING RAKE

(30) Priorité: 17.02.2023 FR 2301497
(43) Date de publication de la demande: 21.08.2024
(73) Titulaire: AIRBUS OPERATIONS (S.A.S.), 31060 Toulouse (FR)
(72) Inventeur: DAJEAN, Cyrille, 31060 TOULOUSE Cedex 9 (FR); BOISSON, Thomas, 31060 TOULOUSE Cedex 9 (FR); DUPE, Nicolas, 31060 TOULOUSE Cedex 9 (FR); JEAN, Nicolas, 31060 TOULOUSE Cedex 9 (FR)
(74) Mandataire: Airbus-OPS SAS

(56) Documents cités:
- FR-A1- 3 090 102
- ANONYMOUS: "Kaltbrunner AG - Ihr kompetenter Partner f�r hochwertige Beschichtungen", 29 January 2023 (2023-01-29), XP093077825, Retrieved from the Internet <URL:http://web.archive.org/web/20230129013922/http://kaltbrunner.ch/de/> [retrieved on 20230831]

## Description

### Domaine technique

La présente invention concerne un râteau de mesure de pression antistatique, en particulier pour un moteur d'un aéronef, et plus particulièrement pour un turboréacteur à double flux.

### Etat de la technique

Lors de certaines phases de conception ou de maintenance d'un aéronef, les moteurs dudit aéronef, notamment des turboréacteurs, sont susceptibles d'être testés. Ces tests nécessitent des prises de mesures, au sol et/ou en vol, en différents endroits du moteur que l'on souhaite tester. Ces prises de mesures impliquent une instrumentation du moteur, en particulier au niveau de l'intérieur d'une veine secondaire. Pour cela, on connaît, par exemple par le document FR 3 090 102 A1, des outils de mesure permettant de réaliser des mesures de pression dans un moteur d'aéronef.

Ces outils de mesure sont disposés dans des zones de circulation de flux d'air et ils sont donc soumis à des efforts de friction pouvant générer des charges électrostatiques. Or, les outils de mesures sont généralement réalisés dans des matériaux isolants, en particulier pour éviter des infiltrations d'humidité qui risquerait de geler à haute altitude et de détériorer l'outil de mesure. De tels outils de mesure ne permettent pas aux charges électrostatiques d'être dissipées, et elles s'accumulent donc sur les surfaces de l'outil de mesure. Au-delà d'une certaine limite, ces charges électrostatiques peuvent se dissiper brusquement en créant une décharge électrique susceptible de perturber les mesures et les communications électroniques.

Les outils de mesure existants ne sont donc pas complètement satisfaisants.

### Exposé de l'invention

La présente invention a pour objet de remédier aux inconvénients précités. Elle concerne un râteau de mesure de pression antistatique, en particulier pour un moteur d'un aéronef, et plus particulièrement pour un turboréacteur à double flux.

Selon l'invention, le râteau de mesure de pression destiné à être agencé sur une bielle, ledit râteau de mesure comprenant au moins :
- un fourreau comprenant deux parois latérales délimitant, entre elles, un logement destiné à recevoir la bielle ; et
- un circuit électronique agencé sur le fourreau et comprenant au moins un capteur de pression,
ledit râteau de mesure comportant, de plus, au moins une couche conductrice recouvrant, au moins partiellement, le fourreau, ladite couche conductrice étant destinée à être connectée électriquement à au moins un élément conducteur configuré pour drainer des charges susceptibles de s'accumuler sur la couche conductrice.

Ainsi, grâce au râteau de mesure, on dispose d'un outil de mesure simple et peu onéreux qui n'accumule pas de charges électrostatiques, en particulier lorsqu'il est soumis à un flux d'air, et qui permet donc d'éviter les problèmes causés par des décharges électrostatiques, notamment des perturbations des mesures prises par les capteurs et/ou des perturbations des communications électriques entre les capteurs et une unité de traitement de données.

De préférence, la couche conductrice correspond à une couche de peinture conductrice avec laquelle au moins une partie du fourreau est peinte.

En outre, la couche conductrice comporte au moins un agent antistatique réalisé à base de l'un des éléments chimiques suivants : du cuivre, du carbone, du nickel, de l'argent, des silicates, de l'indium.

Selon l'invention, le râteau de mesure comporte, de plus, au moins une lame conductrice destinée à connecter électriquement, en permanence, la couche conductrice à au moins un élément conducteur.

Selon l'invention, la lame conductrice comporte une extrémité de fixation fixée dans le logement du fourreau en contact avec la couche conductrice et une extrémité libre faisant saillie hors du logement à une extrémité longitudinale du fourreau, l'extrémité libre étant destinée à connecter électriquement, en permanence, la couche conductrice à au moins un élément conducteur en étant plaquée, en permanence, contre ledit élément conducteur.

Avantageusement, la lame conductrice présente une rigidité et un agencement destinés à créer, en permanence, un effort élastique contre l'élément conducteur au niveau de l'extrémité libre, ledit effort élastique étant apte à maintenir un contact entre ladite extrémité libre et ledit élément conducteur de manière à connecter électriquement, en permanence, la couche conductrice audit élément conducteur.

Selon l'invention, le râteau de mesure comporte, de plus, un bord d'attaque rapporté fixé de manière amovible au fourreau par l'intermédiaire d'une contre-plaque agencée dans le logement, ledit bord d'attaque rapporté et ladite contre-plaque étant agencés de part et d'autre d'une paroi avant du fourreau et fixés ensemble audit fourreau de manière à être tous les deux connectés électriquement à la couche conductrice, la lame conductrice étant fixée, à son extrémité de fixation, à la contre-plaque.

De plus, le râteau de mesure comporte au moins une unité de traitement de données apte à recevoir des données mesurées par les capteurs du circuit électronique, ladite unité de traitement données étant agencée sur le fourreau ou déportée.

La présente invention concerne également un moteur d'un aéronef. Selon l'invention, le moteur comporte une veine secondaire et au moins une porte d'inversion mobile, ladite porte d'inversion comprenant au moins une bielle fixée articulée entre la porte d'inversion et une motorisation, ladite bielle étant configurée pour permettre d'amener la porte d'inversion dans une position escamotée dans laquelle elle n'est pas en travers de la veine secondaire et dans une position déployée dans laquelle est en travers de la veine secondaire, ledit moteur comportant au moins un râteau de mesure tel que décrit ci-dessus agencé sur au moins une bielle du moteur, la ou les bielles étant chacune logée dans le logement d'au moins un râteau de mesure.

La présente invention concerne également un aéronef comportant au moins un moteur tel que décrit ci-dessus.

### Brève description des figures

Les figures annexées feront bien comprendre comment l'invention peut être réalisée. Sur ces figures, des références identiques désignent des éléments semblables.
La figure 1 est une vue de côté d'un aéronef selon l'invention.
La figure 2 est une vue de côté, en coupe, d'un moteur selon l'invention comprenant des portes d'inversion dans une position escamotée.
La figure 3 est une vue de côté, en coupe, d'un moteur selon l'invention comprenant des portes d'inversion dans une position déployée.
La figure 4 est une vue de côté d'un râteau de mesure selon un mode de réalisation particulier l'invention.
La figure 5 est une vue éclatée du râteau de mesure de la figure 4.
La figure 6 est une vue en coupe selon un plan de coupe A-A du râteau de mesure de la figure 4.

### Description détaillée

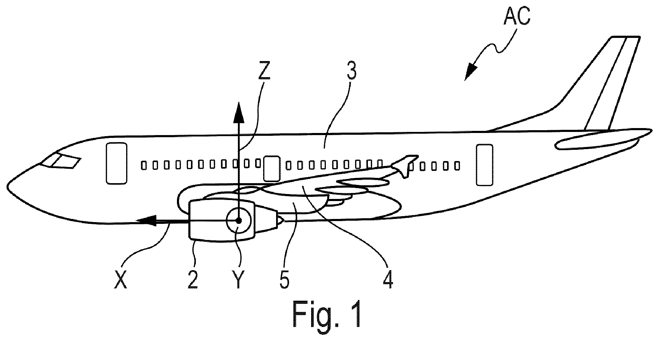

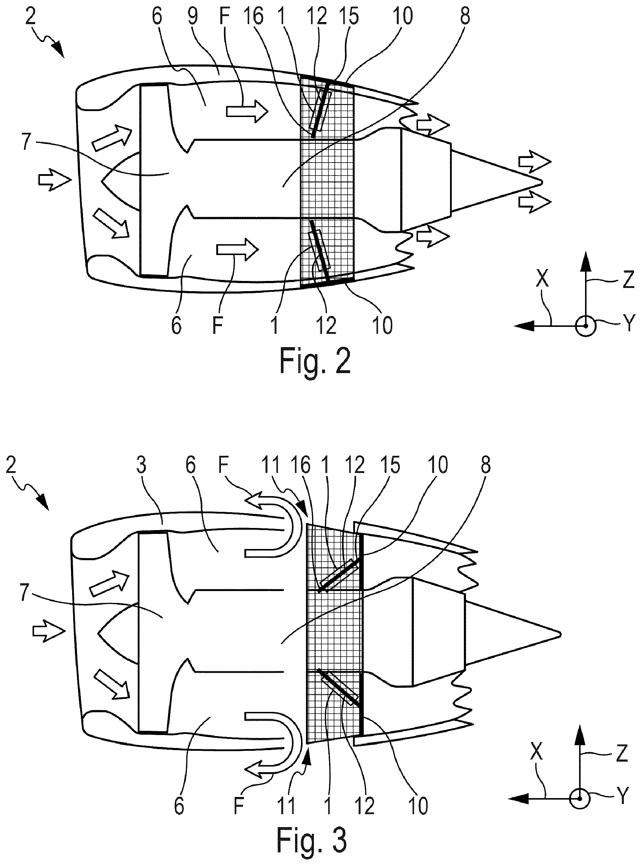

Le râteau de mesure de pression 1 (ci-après râteau de mesure 1) permettant d'illustrer l'invention est représenté dans des modes de réalisation particuliers de la figure 2 à la figure 6. Il correspond à un outil de mesure permettant de réaliser des mesures aérodynamiques, notamment des mesures de pression. Bien que non exclusivement, le râteau de mesure 1 est particulièrement adapté pour être utilisé sur un aéronef AC, représenté sur la figure 1. Il permet de réaliser des mesures dans le cadre de tests au sol et/ou en vol. De préférence, le râteau de mesure 1 est agencé dans une veine d'un moteur 2 de l'aéronef AC, comme représenté sur la figure 2 et la figure 3.

L'aéronef AC comporte un fuselage 3 de chaque côté duquel est fixée une aile 4 portant un moteur 2 fixé à un mât 5 situé sous ladite aile 4. Dans le mode de réalisation préféré qui est décrit dans la présente description, le moteur 2 correspond à un turboréacteur double flux et le râteau de mesure 1 est configuré pour réaliser des mesures de pression dans une veine secondaire 6 dudit moteur 2. Toutefois, l'invention n'est pas limitée à un tel moteur et le râteau de mesure 1 peut être utilisé dans un grand nombre de situations différentes et variées dans lesquelles la pression d'un flux d'air doit être mesurée.

Dans ce qui suit, on fera référence à un repère (X, Y, Z) orthogonal tel que :
- X est l'axe longitudinal du moteur 2 qui est parallèle à l'axe longitudinal de l'aéronef AC et orienté positivement vers l'avant dudit aéronef AC ;
- Y est l'axe transversal au moteur et perpendiculaire à l'axe X ; et
- Z est l'axe perpendiculaire à l'axe X et à l'axe Y.

Comme représenté sur la figure 2 et la figure 3, le moteur 2 comporte une soufflante 7, une motorisation 8 formant un noyau, et une nacelle 9 disposée autour de la motorisation 8. La veine secondaire 6 est délimitée entre la motorisation 8 et la nacelle 9. L'air pénètre par la soufflante 7 puis il est divisé en un flux primaire qui traverse la motorisation 8 et en un flux secondaire qui traverse la veine secondaire 6, comme représenté par des flèches F sur la figure 2 et la figure 3.

Le moteur 2 comporte également un système d'inversion de poussée qui comprend des portes à inversion 10. Ces portes à inversion 10 sont montées mobiles en rotation autour d'un axe sensiblement perpendiculaire à l'axe X, soit parallèle à l'axe Y. Elles peuvent être amenées dans une position escamotée (figure 2), correspondant à une configuration où le moteur 2 est en mode poussée, et dans une position déployée (figure 3), correspondant à une configuration où le moteur 2 est en mode contre-poussée. Dans la position escamotée, les portes à inversion 10 sont comprises dans les parois de la nacelle 9, elles ne sont pas en travers de la veine secondaire 6, et elles ne font donc pas obstacle au passage du flux d'air secondaire. Dans la position déployée, les portes à inversion 10 s'étendent de la motorisation 8 aux parois de la nacelle 9, elles sont en travers de la veine secondaire 6, et elles font donc obstacle au passage du flux d'air secondaire. De plus, dans cette position déployée, les portes à inversion 10 ouvrent des fenêtres 11 qui communiquent avec l'extérieur de la nacelle 9 et permettent au flux d'air secondaire d'être dévié par lesdites fenêtres 11.

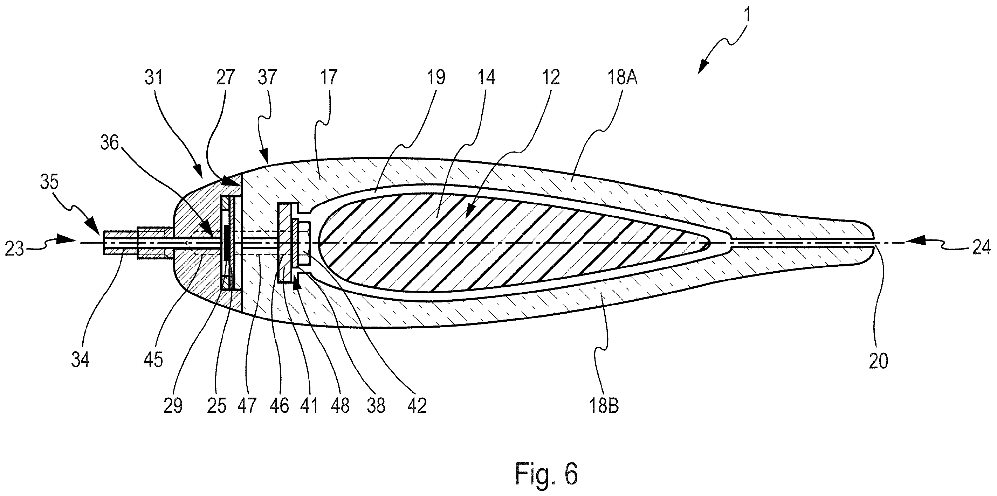

En outre, le moteur 2 comporte une bielle 12 agencée sur chaque porte à inversion 10. Chaque bielle 12 comprend un corps 14 (figure 6) pourvu d'une forme allongée s'étendant entre la motorisation 8 et la porte à inversion 10 sur laquelle elle est agencée. De plus, une extrémité longitudinale 15 de chaque bielle 12 est fixée de manière articulée à la porte à inversion 10 et une autre extrémité longitudinale 16 de chaque bielle 12 est fixée à la motorisation 8. De plus, le corps 14 de chaque bielle 12 présente une section aérodynamique autour de laquelle s'écoule le flux d'air secondaire de la veine secondaire 6.

Le moteur 2 comporte également des éléments de déplacement usuels (vérins, glissières, ...) permettant d'amener les portes à inversion 10 dans la position escamotée et dans la position déployée par l'intermédiaire des bielles 12.

Dans la position escamotée, les bielles 12 sont en travers de la veine secondaire 6, à savoir elles sont orientées de sorte que leur direction longitudinale soit sensiblement incidente au flux d'air secondaire. A l'inverse, dans la position déployée, les bielles 12 ne sont pas en travers de la veine secondaire 6, à savoir elles sont orientées de sorte que leur direction longitudinale soit sensiblement dans la direction du flux d'air secondaire.

Dans un mode de réalisation préféré, représenté de la figure 2 à la figure 6, le râteau de mesure 1 est agencé sur une bielle 12 du moteur 2, toutefois, dans d'autres modes de réalisation, il peut être configuré pour être agencé sur un autre élément du moteur 2 ou de l'aéronef AC.

Dans ce mode de réalisation, le râteau de mesure 1 est configuré pour permettre de réaliser des mesures de pression du flux d'air dans la veine secondaire 6, en particulier lorsque la porte d'inversion 10 est dans la position escamotée. Dans cette configuration, le râteau de mesure 1 subit des frottements du flux d'air qui sont susceptibles de générer des charges électrostatiques sur des surfaces externes du râteau de mesure 1.

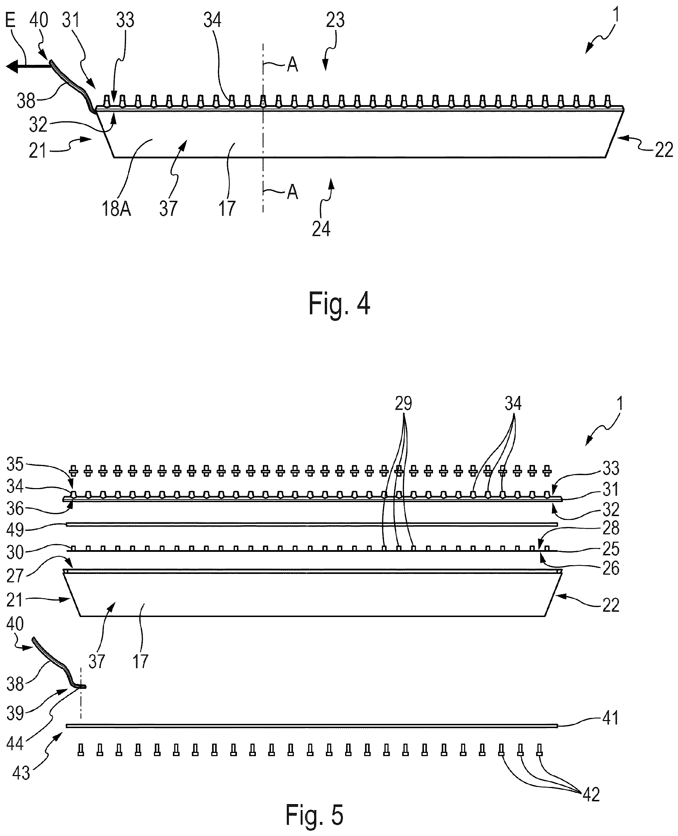

Le râteau de mesure 1 est particulier en ce qu'il comporte une couche conductrice 37, représentée schématiquement de la figure 4 à la figure 6, qui est apte à conduire des charges électrostatiques susceptibles d'être générées et de s'accumuler sur des surfaces dudit râteau de mesure 1. Ce faisant, la couche conductrice 37 permet à ces charges électrostatiques d'être drainées par un élément tiers, comme décrit plus en détail ci-après dans la description.

Le râteau de mesure 1, représenté de la figure 4 à la figure 6, est un outil de mesure comprenant plusieurs éléments qui sont assemblés et fixés ensemble « en sandwich », comme illustré sur la vue éclatée de la figure 5. L'agencement de ces éléments est décrit plus en détail dans la suite de la description.

Le râteau de mesure 1 comporte, notamment, un fourreau 17 qui est disposé et fixé sur le corps 14 de la bielle 12 que l'on souhaite instrumenter. Ce fourreau 17 présente une forme allongée et un profil aérodynamique, par exemple un profil biconvexe. De préférence, le fourreau 17 est réalisé par impression en trois dimensions dans un matériau de type polymère, par exemple en polyamide.

Le râteau de mesure 1 présente une longueur apte à couvrir, au moins en partie, la totalité de la bielle 12. A titre non limitatif, dans l'exemple considéré d'une application à un moteur d'aéronef, le râteau de mesure 1 présente typiquement une longueur comprise entre 50 cm et 1 m, en particulier une longueur de 80 cm.

Comme représenté en vue de coupe sur la figure 6, le fourreau 17 comprend deux parois latérales 18A et 18B délimitant, entre elles, un logement 19 configuré pour recevoir le corps 14 de la bielle 12. De plus, le logement 19 communique avec l'extérieur du fourreau 17 par une fente 20 qui s'étend sur la longueur du fourreau 17 entre les parois latérales 18A et 18B. Celles-ci forment ainsi une pince permettant d'enserrer le corps 14 de la bielle 12. En outre, le fourreau 17 est ouvert à des extrémités longitudinales 21 et 22, ce qui permet aux extrémités longitudinales 15 et 16 de la bielle 12 de dépasser dudit fourreau 17 afin d'être fixées, respectivement, à la motorisation 8 et à la porte d'inversion 10.

La fente 20 est plus étroite que l'épaisseur du corps 14 de la bielle 12 et l'introduction de ladite bielle 12 nécessite donc un écartement élastique des parois latérales 18A et 18B pour la mise en place du râteau de mesure 1 sur la bielle 12. Un resserrement élastique des parois latérales 18A et 18B sur le corps 14 de la bielle 12, lorsque celui-ci est dans le logement 19, permet de maintenir en place le râteau de mesure 1 sans qu'il soit nécessaire de prévoir des éléments complémentaires. Le corps 14 peut, cependant, comporter des formes ou des éléments (non représentés) pour faciliter la mise en position du râteau de mesure 1 et/ou pour empêcher le déplacement du fourreau 17 le long de la bielle 12.

Dans une réalisation particulière, les parois latérales 18A et 18B peuvent être maintenues serrées entre elles sur le corps 14 de la bielle 12 par l'intermédiaire d'une fixation amovible (non représentées). Par exemple, elles peuvent être vissées, boulonnées, collées ou serrées par un collier de serrage.

Le fourreau 17 présente, lorsqu'il est en place sur la bielle 12 dans la veine secondaire 6, un bord d'attaque 23 orienté vers l'avant (positivement selon l'axe X) et un bord de fuite 24 orienté vers l'arrière (négativement selon l'axe X) par rapport à l'écoulement de l'air dans la veine secondaire 6. De préférence, le fourreau 17 est configuré de sorte que la fente 20 est située au bord de fuite 24.

Par ailleurs, comme illustré sur la figure 5 et la figure 6, le râteau de mesure 1 comporte un circuit électronique 25 agencé sur le fourreau 17. Ce circuit électronique 25 est, notamment, pourvu d'une face 26 agencée sur une face avant 27 du fourreau 17. La face avant 27 correspond à une surface située du côté du bord d'attaque 23 qui s'étend sur la longueur dudit fourreau 17. Le circuit électronique 25 est également pourvu d'une face 28, opposée à la face 26 et donc orientée vers le bord d'attaque 23, sur laquelle est agencée une pluralité de capteurs 29 de pression.

De préférence, le circuit électronique 25 correspond à un circuit imprimé présentant une forme allongée et il est agencé sur toute la longueur de la face avant 27. Cependant, dans des modes de réalisation particuliers, il peut s'agir d'un autre type de circuit électronique s'étendant sur toute ou une partie de la face avant 27. De plus, les capteurs 29 sont répartis de manière à former une ligne s'étendant sur la longueur du circuit électronique 25.

Le circuit électronique 25 comprend également un bus de données permettant des communications de données entrantes et/ou sortantes avec les capteurs 29 ainsi qu'une alimentation électrique. Dans le mode de réalisation préféré de la présente description, les capteurs 29 sont configurés pour mesurer des valeurs de pressions générées par le flux d'air secondaire de la veine secondaire 6, comme précisé ci-après dans la description.

De préférence, les capteurs 29 correspondent à des capteurs de pression de type microsystème électromécanique (aussi appelés MEMS pour « MicroElectroMechanical Systems » en anglais). Toutefois, il peut s'agir de capteurs d'un autre type aptes à réaliser des mesures de pression. A titre d'exemple non limitatif, les capteurs « MEMS », particulièrement compacts, permettent d'obtenir une ligne de capteurs 29 le long du circuit électronique 25 avec une densité de cinquante capteurs par mètre ce qui représente un capteur tous les 20 mm. Selon les applications et/ou la précision de mesure que l'on souhaite obtenir, la densité de capteurs peut varier, par exemple avec une distance entre deux capteurs 29 comprise entre 10 mm et 100 mm.

En outre, le râteau de mesure 1 comporte une unité de traitement données 30, représentée schématiquement sur la figure 5. L'unité de traitement de données 30 est connectée au circuit électronique 25 de manière à pouvoir recevoir des données mesurées par les capteurs 29 dudit circuit électronique 25. De façon non limitative, l'unité de traitement de données 30 peut être configurée pour assurer une fonction d'acquisition et de transmission des données mesurées par les capteurs 29 et/ou une fonction d'enregistrement, par exemple dans une mémoire (non représentée). Dans une réalisation particulière, l'unité de traitement de données 30 est intégrée directement sur le râteau de mesure 1, par exemple dans une partie du fourreau 17. Dans d'autres modes de réalisation, l'unité de traitement de données 30 peut être déportée ailleurs. Par exemple, elle peut être agencée sur une partie du moteur 2, sur ou sous la porte d'inversion 10.

Dans un de ces modes de réalisation, le râteau de mesure 1 peut comporter un pied (non représenté sur les figures) agencé à une extrémité du fourreau 17. Le pied présente une forme plane. Le pied est configuré pour protéger l'unité de traitement de données 30 dans le cas où celle-ci est agencée sur le râteau de mesure 1. Le pied est apte à être plaqué contre la porte d'inversion 10 de manière à recouvrir l'unité de traitement de données 30 pour la protéger du milieu extérieur.

Comme représenté de la figure 4 à la figure 6, le râteau de mesure 1 comporte, également, un bord d'attaque rapporté 31 fixé sur la face avant 27 du fourreau 17 de manière à recouvrir le circuit électronique 25. Toutefois, dans d'autres modes de réalisation, le râteau de mesure 1 peut comporter un le bord d'attaque directement intégré dans la forme du fourreau 17.

Le bord d'attaque rapporté 31 correspond à une pièce monobloc fixée sur le fourreau 17 de manière amovible, par exemple à l'aide de vis. Il peut être réalisé par usinage dans un matériau métallique. En particulier, il est réalisé dans un matériau électriquement conducteur, de préférence en aluminium.

Le bord d'attaque rapporté 31 comprend une face interne 32 agencée sur la face avant 27 du fourreau 17 de manière à recouvrir le circuit électronique 25. Il comprend également une face externe 33 opposée à ladite face interne 32. Comme illustré sur la figure 4, la face externe 33 est située vers le bord d'attaque 23 du fourreau 17 et elle présente une forme arrondie prévue pour être incidente au flux d'air secondaire.

Le bord d'attaque 31 comporte, en outre, une pluralité de prises d'air 34 réparties sur la longueur dudit bord d'attaque rapporté 31. Dans l'exemple illustré sur la figure 4 et la figure 5, les prises d'air 34 sont réparties à intervalles réguliers, c'est-à-dire à une même distance l'une de l'autre. Toutefois, elles peuvent également être réparties à intervalles irréguliers. Chaque prise d'air 34 forme un passage fluidique entre la face externe 33 et la face interne 32. Ces prises d'air 34 présentent une extrémité 35 débouchant par la face externe 33 dans la veine secondaire 6 et une extrémité 36 débouchant par la face interne 32 sur le circuit électronique 25. En particulier, chaque prise d'air 34 débouche par l'extrémité 36 en regard d'un capteur 29 du circuit électronique 25.

Par ailleurs, comme représenté sur la figure 5, le râteau de mesure 1 comporte un joint 49 agencé entre le bord d'attaque rapporté 31 et le circuit électronique 25. Le joint 49 est plaqué entre la face interne 32 du bord d'attaque rapporté 31 et la face 28 du circuit électronique 25 de manière à assurer une étanchéité au niveau de l'interface. Toutefois, le joint 49 comporte des ouvertures permettant à chaque prise d'air 34 de déboucher sur un capteur 29.

Le bord d'attaque rapporté 31 ainsi configuré permet à chaque capteur 29 de mesurer une pression du flux d'air de la veine secondaire 6 canalisé par une prise d'air 34 particulière. Cependant, dans des modes de réalisation particuliers, chaque prise d'air 34 peut déboucher en regard d'une pluralité de capteurs 29, de manière à réaliser plusieurs mesures liées à un flux d'air canalisé par une prise d'air 34.

De plus, comme représenté schématiquement de la figure 4 à la figure 6, le râteau de mesure 1 comporte la couche conductrice 37 recouvrant le fourreau 17. De préférence, la couche conductrice 37 recouvre entièrement toutes les surfaces du fourreau 17. Cependant, dans d'autres modes de réalisation, la couche conductrice 37 peut recouvrir partiellement les surfaces du fourreau 17, par exemple uniquement les surfaces soumises au flux d'air de la veine secondaire 6.

La couche conductrice 17 correspond à une couche de revêtement durable présentant des propriétés de conduction électrique qui sont également durables. Par « durable », on entend que la couche conductrice 37 est une couche qui ne s'écaille pas ou ne se retire pas au fil du temps, en particulier lorsqu'elle est soumise à un flux d'air. De même, on entend que la couche conductrice 37 est une couche qui conserve des propriétés de conduction électrique inchangées au fil du temps, en particulier lorsqu'elle est soumise à un flux d'air.

En outre, le râteau de mesure 1 est configuré de sorte que la couche conductrice 37 soit électriquement connectée, en permanence, à un élément conducteur configuré pour drainer des charges susceptibles de s'accumuler sur la couche conductrice 37. De préférence, cet élément conducteur correspond à un élément conducteur du moteur 2.

Cette connexion est configurée pour permettre à la couche conductrice de se décharger, à savoir que des charges électrostatiques présentes sur la couche conductrice 37 puissent être drainées par l'élément conducteur du moteur 2. Par exemple, le fourreau 17 peut présenter une forme adéquate permettant, lorsque le râteau de mesure 1 est monté sur la bielle 12, audit fourreau 17 d'être en contact avec la nacelle 9 ou la porte à inversion 10. Le fourreau 17 étant recouvert de la couche conductrice 37, ce contact permet d'obtenir une connexion électrique apte à drainer des charges électrostatiques.

Toutefois, dans d'autres modes de réalisation, comme détaillé ci-après, la couche conductrice 37 peut être connectée à un élément conducteur du moteur 2 par l'intermédiaire d'autres éléments.

Ainsi, grâce au râteau de mesure 1, on dispose d'un outil de mesure simple et peu onéreux qui n'accumule pas de charges électrostatiques, en particulier lorsqu'il est soumis à un flux d'air. Un tel râteau de mesure 1 permet donc d'éviter les problèmes causés par des décharges électrostatiques. Il permet notamment d'éviter des perturbations de mesures prises par les capteurs 29 et/ou des perturbations de communications électriques entre les capteurs 29 et l'unité de traitement de données 30.

Dans un mode de réalisation préféré, la couche conductrice 37 correspond à une couche de peinture conductrice. Il peut s'agir d'une peinture comprenant une résine dans laquelle des particules chargées ont été introduites, par exemple sous la forme d'une poudre métallique. Il peut s'agir de peintures antistatiques utilisées dans certains milieux industriels ou dans le domaine naval. Le fourreau 17 peut être entièrement peint à l'aide d'une telle peinture conductrice, ou être peint seulement sur ses surfaces soumises au flux d'air de la veine secondaire 6.

De façon non limitative, la peinture conductrice composant la couche conductrice 37 peut comporter des agents antistatiques réalisés à base d'au moins l'un des éléments chimiques suivants : du cuivre, du carbone, du nickel, de l'argent, des silicates, de l'indium. Ces éléments chimiques peuvent notamment se présenter sous la forme d'oxydes

Par ailleurs, dans un mode de réalisation particulier, représenté sur la figure 4 et la figure 5, le râteau de mesure comporte également une lame conductrice 38. Elle est configurée pour connecter électriquement, en permanence, la couche conductrice 37 à un élément conducteur du moteur 2. Par exemple, la lame conductrice 38 peut être configurée de manière à être en contact, à la fois avec la couche conductrice 37 et avec la nacelle 9 ou la porte à inversion 10 du moteur 2, lorsque le râteau de mesure 1 est installé sur la bielle 12. De cette façon, une connexion avec un élément conducteur du moteur 2, permettant de drainer les charges électrostatiques pouvant être générées sur la couche conductrice 37, est assurée en permanence par un élément dédié, à savoir la lame conductrice 38.

La lame conductrice 38 est réalisée dans un matériau métallique électriquement conducteur, de préférence en aluminium. Elle présente une forme, et notamment une épaisseur, lui permettant d'être suffisamment rigide pour assurer un contact permanent, sans être décollée par un élément extérieur, par exemple par le flux d'air de la veine secondaire 6. Selon le matériau, l'épaisseur nécessaire peut varier. A titre d'exemple non limitatif, pour une lame réalisée en aluminium, une épaisseur appropriée peut être au moins 1 mm.

De plus, la lame conductrice 38 peut présenter des formes variées adaptées à de nombreuses configurations. En outre, elle est facilement démontable, aussi il est possible de disposer d'une pluralité de lames conductrices 38 parmi lesquelles on choisit celle qui présente une forme adaptée à une configuration donnée. Par exemple, on peut disposer de lames conductrices 38 de longueur plus ou moins grande selon qu'on souhaite connecter le râteau de mesure à un élément conducteur plus ou moins éloigné de ce dernier.

Dans une réalisation préférée de ce mode de réalisation, représentée de la figure 5 à la figure 6, la lame conductrice 38 comporte une extrémité de fixation 39 fixée dans le logement 19 du fourreau 17. Cette fixation est configurée pour obtenir un contact électriquement conducteur entre la lame conductrice 38 et la couche conductrice 37. La lame conductrice 38 comporte également une extrémité libre 40 faisant saillie hors du logement 19 à l'extrémité longitudinale 21 du fourreau 17. Cette extrémité libre 40 est configurée pour être plaquée, en permanence, contre un élément conducteur du moteur 2 lorsque le râteau de mesure 1 est installé sur la bielle 12.

Plus particulièrement, la lame conductrice 38 est configurée de manière à présenter une rigidité et un agencement (par rapport à la partie du moteur 2 sur laquelle elle doit être plaquée) aptes à créer un effort élastique au niveau de l'extrémité libre 40 contre l'élément conducteur du moteur 2 auquel on souhaite la connecter électriquement. Cet effort élastique, représenté schématiquement par une flèche E sur la figure 4, est apte à maintenir un contact permanent entre l'extrémité libre 40 et l'élément conducteur du moteur 2 lorsque le râteau de mesure 1 est installé sur la bielle 12.

Par ailleurs, dans le mode de réalisation particulier décrit ci-dessus dans lequel râteau de mesure 1 comporte un pied (non représenté), le pied peut être agencé à l'extrémité longitudinale 21 du fourreau 17. Le pied est configuré pour assurer le plaquage de la lame conductrice 38 contre un élément du moteur 2. Quand le râteau de mesure 1 est agencé sur la bielle 12, la lame conductrice 38 est située entre ledit élément du moteur 2 (par exemple la porte d'inversion 10) et le pied.

Dans un mode de réalisation particulier, illustré sur la figure 5 et la figure 6, le râteau de mesure 1 comporte le bord d'attaque rapporté 31 tel que décrit ci-avant-dans la présente description. Ce dernier est fixé de façon amovible sur le fourreau 17 par l'intermédiaire d'une contre-plaque 41 agencée dans le logement 19 du fourreau 17. De préférence, comme représenté sur la figure 6, la contre plaque-plaque 41 est glissée dans une rainure 48 en forme de « T », ce qui la maintient mécaniquement dans le fourreau 17 et laisse un accès pour insérer les vis 45.

Pour la fixation du bord d'attaque rapporté 31, la contre-plaque 41 et le fourreau 17 sont pourvus, respectivement, de trous de passage 46 et 47 prévus pour être alignés les uns avec les autres. Des vis 42 sont disposées dans ces trous de passage 46 et 47 de manière à dépasser du côté de la face avant 27 du fourreau 17. En outre, le bord d'attaque rapporté 31 comporte des trous taraudés 45 dans lesquels les vis 42 sont aptes à être vissées. Ainsi, les vis 42 permettent de fixer le bord d'attaque rapporté 31 au fourreau 17 en le plaquant contre la face avant 27.

Dans ce mode de réalisation particulier, la contre-plaque 41 s'étend sur toute la longueur du fourreau de sorte que la lame conductrice 38 puisse être fixée à l'une de ces extrémités. Plus précisément, l'extrémité de fixation 39 de la lame conductrice 38 est agencée contre une extrémité 43 de la contre-plaque 41 située à l'extrémité longitudinale 21 du fourreau 17. L'extrémité de fixation 39 présente un trou 44, représenté schématiquement sur la figure 5, permettant de fixer la lame conductrice 38 sur la contre-plaque 41 à l'aide d'une vis 42.

La contre-plaque 41 est plaquée dans le logement 19 du fourreau 17 qui est recouvert par la couche conductrice 37. Comme elle est réalisée dans un matériau métallique électriquement conducteur, elle permet de connecter électriquement la couche conductrice 37 à la lame conductrice 38.

Par ailleurs, dans cette configuration, le bord d'attaque rapporté 31 est également plaqué contre la face avant 27 du fourreau 17 qui est recouvert par la couche conductrice 37. Par conséquent, des charges électrostatiques générées par le flux d'air de la veine secondaire 6 sur le bord d'attaque rapporté 31 peuvent être drainées via la couche conductrices 37, via la contre-plaque 41 et via la lame conductrice 38, par l'élément conducteur du moteur 2 auquel on choisit de connecter le râteau de mesure 1.

Le râteau de mesure 1 tel que décrit ci-dessus présente de nombreux avantages. En particulier :
- il permet d'obtenir un outil de mesure simple et peu onéreux qui n'accumule pas, ou très peu, de charges électrostatiques sur la couche conductrice 37 ;
- il permet d'obtenir une connexion électrique permanente entre la couche conductrice 37 et un élément conducteur du moteur 2 ;
- il permet d'éviter l'apparition de décharges électrostatiques indésirables ;
- il permet d'éviter des problèmes de mesure et/ou de communications de données causées par des décharges électrostatiques ; et
- il est facilement adaptable à des configurations variées.

## Revendications

1. Râteau de mesure de pression destiné à être agencé sur une bielle (12), ledit râteau de mesure (1) comprenant au moins :
- un fourreau (17) comprenant deux parois latérales (18A, 18B) délimitant, entre elles, un logement (19) destiné à recevoir la bielle (12), et
- un circuit électronique (25) agencé sur le fourreau (17) et comprenant au moins un capteur (29), **caractérisé en ce que** le râteau de mesure de pression comporte, de plus,
- au moins une couche conductrice (37) recouvrant, au moins partiellement, le fourreau (17), ladite couche conductrice (37) étant destinée à être connectée électriquement à au moins un élément conducteur configuré pour drainer des charges susceptibles de s'accumuler sur la couche conductrice (37),
- au moins une lame conductrice (38) destinée à connecter électriquement, en permanence, la couche conductrice (37) à au moins un élément conducteur, la lame conductrice (38) comportant une extrémité de fixation (39) fixée dans le logement (19) du fourreau (17) en contact avec la couche conductrice (37) et une extrémité libre (40) faisant saillie hors du logement (19) à une extrémité longitudinale (21, 22) du fourreau (17), l'extrémité libre (40) étant destinée à connecter électriquement, en permanence, la couche conductrice (37) à au moins un élément conducteur en étant plaquée, en permanence, contre ledit élément conducteur, et
- un bord d'attaque rapporté (31) fixé de manière amovible au fourreau (17) par l'intermédiaire d'une contre-plaque (41) agencée dans le logement (19), ledit bord d'attaque rapporté (31) et ladite contreplaque (41) étant agencés de part et d'autre d'une paroi avant (27) du fourreau (17) 15 et fixés ensemble audit fourreau (17) par des éléments de fixation de manière à être tous les deux connectés électriquement à la couche conductrice (37), la lame conductrice (38) étant fixée, à son extrémité de fixation (39), à la contre-plaque (41).

2. Râteau de mesure de pression selon la revendication 1, **caractérisé en ce que** la couche conductrice (37) correspond à une couche de peinture conductrice avec laquelle au moins une partie du fourreau (17) est peinte.

3. Râteau de mesure de pression selon l'une des revendications 1 et 2, **caractérisé en ce que** la couche conductrice (37) comporte au moins un agent antistatique réalisé à base de l'un des éléments chimiques suivants : du cuivre, du carbone, du nickel, de l'argent, des silicates, de l'indium.

4. Râteau de mesure de pression selon la revendication 3, **caractérisé en ce que** la lame conductrice (38) présente une rigidité et un agencement destinés à créer, en permanence, un effort élastique contre un élément conducteur au niveau de l'extrémité libre (40), ledit effort élastique étant apte à maintenir un contact entre ladite extrémité libre (40) et ledit élément conducteur de manière à connecter électriquement, en permanence, la couche conductrice (37) audit élément conducteur.

5. Râteau de mesure selon l'une quelconque des revendications précédentes, **caractérisé en ce qu'**il comporte au moins une unité de traitement de données (30) apte à recevoir des données mesurées par les capteurs (29) du circuit électronique (25), ladite unité de traitement de données (30) étant agencée sur le fourreau (17) ou déportée.

6. Moteur d'un aéronef, ledit moteur (2) comportant une veine secondaire (6) et au moins une porte d'inversion (10) mobile, ladite porte d'inversion (10) comprenant au moins une bielle (12) fixée articulée entre la porte d'inversion (10) et une motorisation (8), ladite bielle (12) étant configurée pour permettre d'amener la porte d'inversion (10) dans une position escamotée dans laquelle elle n'est pas en travers de la veine secondaire (6) et dans une position déployée dans laquelle elle est en travers de la veine secondaire (6), **caractérisé en ce qu'**il comporte au moins un râteau de mesure (1) selon l'une quelconque des revendication 1 à 5, agencé sur au moins une bielle (12) du moteur (2), ladite ou lesdites bielles (12) étant chacune logée dans le logement (19) d'au moins un râteau de mesure (1).

7. Aéronef, **caractérisé en ce qu'**il comporte au moins un moteur (2) selon la revendication 6.

## Patentansprüche

1. Druckmessrechen, der dazu bestimmt ist, an einer Stange (12) angeordnet zu werden, wobei der Messrechen (1) mindestens umfasst:
- eine Hülse (17), die zwei Seitenwände (18A, 18B) umfasst, die zwischen sich eine Aufnahme (19) begrenzen, die dazu bestimmt ist, die Stange (12) aufzunehmen, und
- eine elektronische Schaltung (25), die auf der Hülse (17) angeordnet ist und mindestens einen Sensor (29) umfasst, **dadurch gekennzeichnet, dass** der Druckmessrechen außerdem umfasst:
- mindestens eine leitende Schicht (37), welche die Hülse (17) wenigstens teilweise bedeckt, wobei die leitende Schicht (37) dazu bestimmt ist, mit mindestens einem leitenden Element elektrisch verbunden zu werden, das dafür ausgelegt ist, Ladungen abzuleiten, die sich auf der leitenden Schicht (37) akkumulieren können,
- mindestens eine leitende Lamelle (38), die dazu bestimmt ist, die leitende Schicht (37) ständig mit mindestens einem leitenden Element zu verbinden, wobei die leitende Lamelle (38) ein Befestigungsende (39) umfasst, das in der Aufnahme (19) der Hülse (17) im Kontakt mit der leitenden Schicht (37) befestigt ist, und ein freies Ende (40), das an einem Längsende (21, 22) der Hülse (17) aus der Aufnahme (19) herausragt, wobei das freie Ende (40) dazu bestimmt ist, die leitende Schicht (37) ständig mit mindestens einem leitenden Element zu verbinden, indem es ständig an dieses leitende Element angedrückt wird, und
- eine angesetzte Vorderkante (31), die über eine in der Aufnahme (19) angeordnete Gegenplatte (41) lösbar an der Hülse (17) befestigt ist, wobei die angesetzte Vorderkante (31) und die Gegenplatte (41) beiderseits einer Vorderwand (27) der Hülse (17) angeordnet sind und zusammen an der Hülse (17) durch Befestigungselemente derart befestigt sind, dass sie alle beide mit der leitenden Schicht (37) elektrisch verbunden sind, wobei die leitende Lamelle (38) an ihrem Befestigungsende (39) an der Gegenplatte (41) befestigt ist.

2. Druckmessrechen nach Anspruch 1, **dadurch gekennzeichnet, dass** die leitende Schicht (37) einer leitenden Lackschicht entspricht, mit der wenigstens ein Teil der Hülse (17) lackiert ist.

3. Druckmessrechen nach einem der Ansprüche 1 und 2, **dadurch gekennzeichnet, dass** die leitende Schicht (37) mindestens ein Antistatikum umfasst, das auf der Basis eines der folgenden chemischen Elemente hergestellt ist: Kupfer, Kohlenstoff, Nickel, Silber, Silikate, Indium.

4. Druckmessrechen nach Anspruch 3, **dadurch gekennzeichnet, dass** die leitende Lamelle (38) eine Steifigkeit und eine Anordnung aufweist, die dazu bestimmt sind, ständig eine gegen ein leitendes Element gerichtete elastische Kraft am freien Ende (40) zu erzeugen, wobei diese elastische Kraft geeignet ist, einen Kontakt zwischen dem freien Ende (40) und dem leitenden Element aufrechtzuerhalten, um so die leitende Schicht (37) ständig mit dem leitenden Element zu verbinden.

5. Messrechen nach einem der vorhergehenden Ansprüche, **dadurch gekennzeichnet, dass** er mindestens eine Datenverarbeitungseinheit (30) umfasst, die in der Lage ist, durch die Sensoren (29) der elektronischen Schaltung (25) gemessene Daten zu empfangen, wobei die Datenverarbeitungseinheit (30) in die Hülse (17) integriert oder von ihr entfernt ist.

6. Luftfahrzeugtriebwerk, wobei das Triebwerk (2) einen Sekundärstromkanal (6) und mindestens eine bewegliche Schubumkehrklappe (10) umfasst, wobei die Schubumkehrklappe (10) mindestens eine Stange (12) umfasst, die gelenkig zwischen der Schubumkehrklappe (10) und einem Motorantrieb (8) befestigt ist, wobei die Stange (12) dafür ausgelegt ist zu ermöglichen, die Schubumkehrklappe (10) in eine weggeklappte Position zu bewegen, in der sie nicht quer zum Sekundärstromkanal (6) angeordnet ist, und in eine ausgeklappte Position, in der sie quer zum Sekundärstromkanal (6) angeordnet ist, **dadurch gekennzeichnet, dass** es mindestens einen Messrechen (1) nach einem der Ansprüche 1 bis 5 umfasst, der an mindestens einer Stange (12) des Triebwerks (2) angeordnet ist, wobei die Stange oder die Stangen (12) jeweils in der Aufnahme (19) mindestens eines Messrechens (1) aufgenommen ist bzw. sind.

7. Luftfahrzeug, **dadurch gekennzeichnet, dass** es mindestens ein Triebwerk (2) nach Anspruch 6 umfasst.

## Claims

1. Pressure measuring rake intended for arrangement on a link rod (12), said measuring rake (1) comprising at least:
- a sheath (17) comprising two side walls (18A, 18B) which between them delimit a recess (19) intended for receiving the link rod (12); and
- an electronic circuit (25) arranged on the sheath (17) and comprising at least one sensor (29), **characterized in that** the pressure measuring rake additionally comprises
- at least one conductive layer (37) at least partially covering the sheath (17), said conductive layer (37) being intended to be electrically connected to at least one conductive element configured to drain off charges that are liable to build up on the conductive layer (37),
- at least one conductive strip (38) intended to electrically connect the conductive layer (37) at all times to at least one conductive element, the conductive strip (38) having a fixing end (39) fixed in the recess (19) in the sheath (17) in contact with the conductive layer (37) and a free end (40) protruding from the recess (19) at one longitudinal end (21, 22) of the sheath (17), the free end (40) being intended to electrically connect the conductive layer (37) at all times to at least one conductive element by being pressed against said conductive element at all times, and
- a patched leading edge (31) removably fixed to the sheath (17) via a counter-plate (41) arranged in the recess (19), said patched leading edge (31) and said counter-plate (41) being arranged on either side of a front wall (27) of the sheath (17) and fixed to said sheath (17) together by fixing elements so as to be both electrically connected to the conductive layer (37), the conductive strip (38) being fixed, at its fixing end (39), to the counter-plate (41).

2. Pressure measuring rake according to Claim 1, **characterized in that** the conductive layer (37) corresponds to a conductive paint layer painted on at least some of the sheath (17).

3. Pressure measuring rake according to one of Claims 1 and 2, **characterized in that** the conductive layer (37) comprises at least one antistatic agent on the basis of one of the following chemical elements: copper, carbon, nickel, silver, silicates, indium.

4. Pressure measuring rake according to Claim 3, **characterized in that** the conductive strip (38) has a stiffness and an arrangement intended to generate an elastic force against a conductive element at the free end (40) at all times, said elastic force being able to keep said free end (40) in contact with said conductive element so as to electrically connect the conductive layer (37) at all times to said conductive element.

5. Measuring rake according to any one of the preceding claims, **characterized in that** it comprises at least one data processing unit (30) able to receive data measured by the sensors (29) of the electronic circuit (25), said data processing unit (30) being arranged on the sheath (17) or separate.

6. Aircraft engine, said engine (2) comprising a secondary duct (6) and at least one movable reverser door (10), said reverser door (10) comprising at least one link rod (12) fixed in articulated fashion between the reverser door (10) and a motor (8), said link rod (12) being configured to make it possible to bring the reverser door (10) into a retracted position, in which it is not across the secondary duct (6), and into a deployed position, in which it is across the secondary duct (6), **characterized in that** the engine comprises at least one measuring rake (1) according to any one of Claims 1 to 5, arranged on at least one link rod (12) of the engine (2), said one or more link rods (12) each being accommodated in the recess (19) of at least one measuring rake (1).

7. Aircraft, **characterized in that** it comprises at least one engine (2) according to Claim 6.
